# EUROPÄISCHE PATENTANMELDUNG

(11) **EP 1 775 456 A1**
(43) Veröffentlichungstag der Anmeldung: **18.04.2007**
(21) Anmeldenummer: 05022325.4
(22) Anmeldetag: 13.10.2005
(51) Int. Cl.: F02M 27/04, F02M 25/10

(54) **Verfahren und Vorrichtung zur Aktivierung von flüssigen oder gasförmigen Brennstoffen, insbesondere von Benzin- und Dieselkraftstoffen, Kerosin, Heizöl, Erdgas oder dergleichen**

(71) Anmelder: Eco-PowerStar GmbH, 30519 Hannover (DE)
(72) Erfinder: Die Erfindernennung liegt noch nicht vor
(74) Vertreter: GROSSE BOCKHORNI SCHUMACHER

(57) **Zusammenfassung**

Bei einem Verfahren zur Aktivierung von flüssigen oder gasförmigen Brennstoffen B, insbesondere von Benzin- und Dieselkraftstoffen, Kerosin, Heizöl, Erdgas oder dergleichen durch Beaufschlagen des Brennstoffes B mit einem Magnetfeld während der Zuführung des Brennstoffes B über eine Zuführleitung zur Brennkammer oder dergleichen, wird das Magnetfeld durch einen oder mehrere Permanent- und/oder Elektromagneten erzeugt und im Bereich des Magnetfeldes wird die Beaufschlagungsdauer für den Brennstoff B wesentlich erhöht.

## Beschreibung

Die Erfindung betrifft ein Verfahren sowie eine Vorrichtung zur Aktivierung von flüssigen oder gasförmigen Brennstoffen, insbesondere von Benzin- und Dieselkraftstoffen, Kerosin, Heizöl, Erdgas oder dergleichen, wobei die Aktivierung den Wirkungsgrad der Brennstoffe erhöht und den Schadstoffausstoß vermindert.

Es ist bekannt, Kraftstoffe durch magnetische Beaufschlagung zu aktivieren. So beschreibt z. B. die DE 43 31 019 A1 eine Kraftstoffaktivierungsvorrichtung, welche einen magnetischen Körper verwendet. Bei dieser Kraftstoffaktivierungsvorrichtung wird ein wendelförmiges Kraftstoffaktivierungselement aus magnetischem Material in das Innere einer Rohrleitung eingefügt, und die Strömung der durch die Rohrleitung fließenden Kraftstoffe folgt dem wendelförmigen Aktivierungselement, wodurch die Fließbewegung im Bereich des Aktivierungselementes etwas verzögert wird und eine gewisse Verwirbelung des Kraftstoffes erfolgt. Ein magnetischer Körper ist an der Außenseite der Rohrleitung angeordnet, und beim Strömen durch die Rohrleitung wird der Kraftstoff durch das auf ihn einwirkende Magnetfeld aktiviert.

Diese bekannte Vorrichtung hat den Nachteil, dass die Kraftstoffe die Rohrleitung trotz des im Inneren angeordneten Aktivierungselementes relativ schnell passieren, wodurch nur eine geringe Aktivierung und Verbesserung des Wirkungsgrades der Kraftstoffe eintritt.

Der Erfindung liegt deshalb die Aufgabe zugrunde, ein Verfahren und eine Vorrichtung zur Aktivierung von flüssigen oder gasförmigen Brennstoffen zu schaffen, die eine wesentlich höhere Aktivierung der Brennstoffe ermöglichen.

Die Aufgabe wird durch die kennzeichnenden Merkmale des Verfahrens nach Patentanspruch 1 sowie die kennzeichnenden Merkmale der Vorrichtung nach Patentanspruch 8 gelöst.

Vorteilhafte Ausgestaltungen des Verfahrens bilden die Merkmale der Unteransprüche 2 bis 7, während vorteilhafte Ausgestaltungen der Vorrichtung die Merkmale der Unteransprüche 9 bis 15 bilden.

Die Erfindung soll anhand eines bevorzugten Ausführungsbeispiels und unter Bezugnahme auf die anliegenden Zeichnungen nach den Figuren 1a bis c und 2 näher beschrieben werden.
Fig**.** 1a zeigt einen Längsschnitt durch eine bevorzugte Ausführungsform einer erfindungsgemäßen Vorrichtung;
Fig. 1b zeigt einen Querschnitt durch die in Fig. 1a dargestellte Vorrichtung, wie er sich entlang einer Schnittlinie b-b in Fig. 1a ergibt;
Fig. 1c zeigt das in der Vorrichtung nach Fig. 1a in der Mittelachse der Vorrichtung angeordnete Rohr in Einzeldarstellung.
Fig. 2 zeigt eine andere Ausführungsform einer erfindungsgemäßen Vorrichtung, die mit einem Elektrolysator versehen ist.

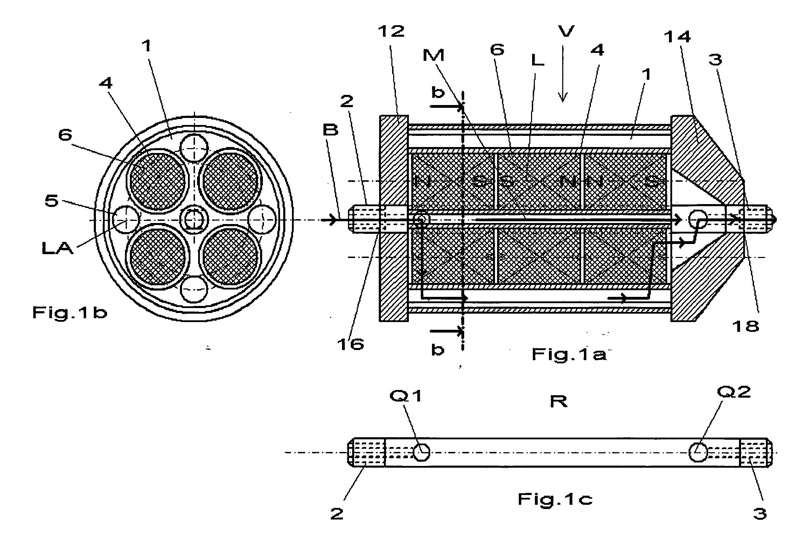

In Fig. 1a ist eine erfindungsgemäße Vorrichtung V zur Aktivierung von flüssigen oder gasförmigen Brennstoffen B dargestellt, die eine im Wesentlichen zylinderförmige Magnetisierungskammer 1, einen Zuleitungsanschluss 2 für den Brennstoff B mit einem bestimmten Querschnitt und einen Ausleitungsanschluss 3 für den Brennstoff B mit einem dem Zuleitungsanschluss 2 etwa gleichen Querschnitt sowie vier in der Magnetisierungskammer 1 angeordnete zylinderförmige Permanentmagnetkörper 4, die mit ihrer Längsachse L parallel und symmetrisch zur Mittelachse M der Magnetisierungskammer 1 befestigt sind, umfasst. In der Magnetisierungskammer 1 sind weiterhin vier weichmagnetische Stäbe 5 wechselweise mit den Permanentmagnetkörpern 4 nebeneinander und mit ihren Längsachsen LA parallel und symmetrisch zur Mittelachse M der Magnetisierungskammer 1 angeordnet. Die Permanentmagnetkörper 4 umfassen je drei Zylindermagnete 6, die in der Längsachse L des Permanentmagnetkörpers 4 angeordnet sind, wobei jeweils gleiche Pole N, S der Zylindermagnete 6 aufeinander zu weisen. Die zylinderförmige Magnetisierungskammer 1 ist an ihrer linken und rechten Stirnseite durch eine linke Abdeckung 12 und eine rechte Abdeckung 14 verschlossen. Die zwischen den Stirnkanten der zylindrischen Magnetisierungskammer und den auf diesen aufsitzenden Flächen der Abdeckungen 12 und 14 angeordneten Dichtungselemente sowie weitere Dichtungselemente zwischen den Durchführungsöffnungen 16 und 18 der Abdeckungen 12 und 14 und den zylindrischen Außenflächen des durch die Durchführungsöffnungen 16 und 18 hindurchgehenden Rohres R sind in der schematischen Darstellung der Fig. 1a nicht erkennbar. Die Vorrichtung V wird durch Muttern (nicht dargestellt) zusammengehalten, die auf die aus den Durchführungsöffnungen 16 und 18 hervorstehenden, mit Gewinde versehenen Zuleitungs- und Ausleitungsanschlüsse 2 und 3 aufgeschraubt werden, wodurch die Magnetisierungskammer 1 zwischen den Abdeckungen 12 und 14 verspannt und abgedichtet wird.

Der zu aktivierende Brennstoff wird verfahrensgemäß in den Zuleitungsanschluss 2 eingeleitet und fließt nur zum geringen Teil innerhalb des Rohres R direkt zum Ausleitungsanschluss 3 sondern verteilt sich, wie die Pfeile in der Fig. 1a andeuten, über die Queröffnungen Q1 des Rohres R innerhalb der Magnetisierungskammer 1 und fließt an den Permanentmagnetkörpem 4 langsam vorbei zu den Queröffnungen Q2 und weiter zum Ausleitungsanschluss 3. Infolge des im Vergleich zum Querschnitt des Zuleitungsanschlusses 2 wesentlich größeren Durchflussquerschnitts in der Magnetisierungskammer 1 wird die Fließgeschwindigkeit des Brennstoffes im Bereich des Magnetfeldes bei konstantem Brennstoffdurchsatz wesentlich herabgesetzt. Dadurch verlängert sich die Beaufschlagungsdauer für den Brennstoff im Bereich des Magnetfeldes entscheidend und die Aktivierung des Brennstoffes wird damit im Vergleich zu den bekannten Aktivierungseinrichtungen stark verbessert.

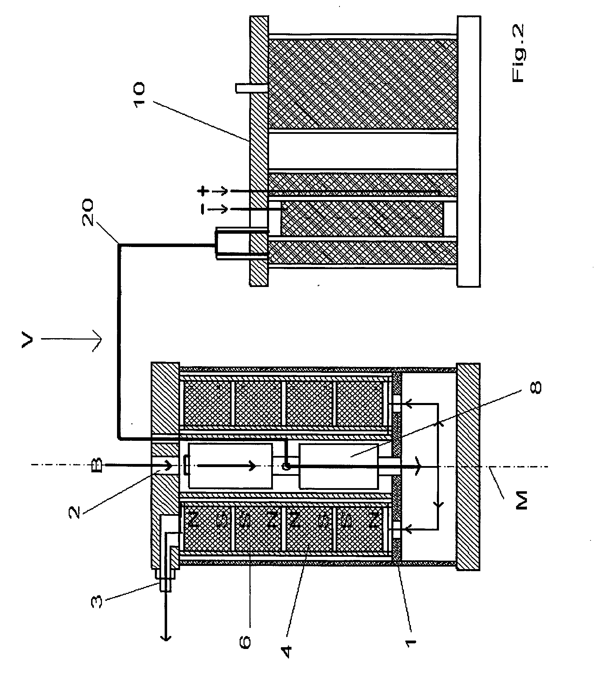

Fig. 2 zeigt eine andere Ausführungsform einer erfindungsgemäßen Aktivierungsvorrichtung für flüssige oder gasförmige Brennstoffe B, bei der der durch die Magnetisierungskammer 1 fließende Brennstoff B zum einen, ähnlich wie im ersten Ausführungsbeispiel, durch das langsame Hindurchströmen durch die Permanentmagnetkörper 4 und weiterhin durch das Zumischen von Wasserstoff und Sauerstoff in einer Mischkammer 8 aktiviert wird. Ein Wasserstoff-Sauerstoff-Gemisch wird hier in einem Elektrolysator 10 durch Elektrolyse aus Wasser gewonnen und über eine Leitung 20 der Mischkammer 8 zugeleitet. Wasserstoff und Sauerstoff verteilen und/oder lösen sich in der Mischkammer 8 im Brennstoff B, und der mit Wasserstoff und Sauerstoff angereicherte Brennstoff B passiert dann langsam, wie durch die Pfeile in Fig. 2 im Inneren der Magnetisierungskammer 1 angedeutet, die hohlzylinderförmig ausgebildeten Permanentmagnete 6 der zylinderförmigen Permanentmagnetkörper 4, sammelt sich oberhalb der Permanentmagnetkörper 4 und wird dann über den Ausleitungsanschluss 3 einer (nicht dargestellten) Brennkammer zugeführt.

Die Permanentmagnetkörper 4 sind in diesem Ausführungsbeispiel im Inneren der zylindrischen Magnetisierungskammer 1 ringförmig um deren Mittelachse M angeordnet, wobei in der in Fig. 2 dargestellten Schnittansicht nur die zwei im Schnitt sichtbaren Permanentmagnetkörper 4 erkennbar sind.

Die Permanentmagnetkörper 4 in den Magnetisierungskammern 1 können auch durch geeignete Elektromagnete ersetzt werden.

Mit den beschriebenen Aktivierungsvorrichtungen kann der Wirkungsgrad der Brennstoffe nachweislich um mehr als 30 % erhöht werden, was weit über den mit den bekannten Aktivierungsvorrichtungen erreichten Wirkungsgraderhöhungen liegt.

## Patentansprüche

1. Verfahren zur Aktivierung von flüssigen oder gasförmigen Brennstoffen (B), insbesondere von Benzin- und Dieselkraftstoffen, Kerosin, Heizöl, Erdgas oder dergleichen durch Beaufschlagen des Brennstoffes (B) mit einem Magnetfeld während der Zuführung des Brennstoffes (B) über eine Zuführleitung zur Brennkammer oder dergleichen, wobei das Magnetfeld durch einen oder mehrere Permanent- und/oder Elektromagneten erzeugt wird,
**dadurch gekennzeichnet, dass** im Bereich des Magnetfeldes die Beaufschlagungsdauer für den Brennstoff (B) wesentlich erhöht wird.

2. Verfahren nach Anspruch 1,
**dadurch gekennzeichnet, dass** die Fließgeschwindigkeit des Brennstoffes (B) im Bereich des Magnetfeldes bei konstantem Brennstoffdurchsatz herabgesetzt wird.

3. Verfahren nach Anspruch 2,
**dadurch gekennzeichnet, dass** die Fließgeschwindigkeit des Brennstoffes (B) durch eine Querschnittserweiterung im Bereich des Magnetfeldes herabgesetzt wird.

4. Verfahren nach einem der vorhergehenden Ansprüche,
**dadurch gekennzeichnet, dass** im Bereich des Magnetfeldes der Fließweg der Brennstoffleitung verlängert wird.

5. Verfahren nach einem der vorhergehenden Ansprüche,
**dadurch gekennzeichnet, dass** der Brennstoff (B) um die Magneten äußerlich herumgeleitet wird.

6. Verfahren nach mindestens einem der vorhergehenden Ansprüche,
**dadurch gekennzeichnet, dass**
dem Brennstoff (B) vor, und/oder während und/oder nach der Beaufschlagung mit dem Magnetfeld Wasserstoff und Sauerstoff zugemischt wird.

7. Verfahren nach dem Anspruch 6,
**dadurch gekennzeichnet, dass** der zugeführte Wasserstoff und Sauerstoff durch Elektrolyse aus Wasser erzeugt wird.

8. Vorrichtung (V) zur Aktivierung von flüssigen und gasförmigen Brennstoffen (B), insbesondere von Benzin- und Dieselkraftstoffen, Kerosin, Heizöl, Erdgas oder dergleichen,
**gekennzeichnet durch** eine im Wesentlichen zylinderförmige Magnetisierungskammer (1), einen Zuleitungsanschluss (2) für den Brennstoff (B) mit einem bestimmten Querschnitt und einen Ausleitungsanschluss (3) für den Brennstoff (B) mit einem dem Zuleitungsanschluss (2) etwa gleichen Querschnitt sowie mindestens einem in der Magnetisierungskammer (1) angeordneten zylinderförmigen Permanentmagnetkörper (4), der mit seiner Längsachse (L) in der Mittelachse (M) der Magnetisierungskammer (1) bzw. parallel und symmetrisch zu dieser so befestigt ist, dass um ihn Raum zum Vorbeiströmen des Brennstoffes (B) verbleibt.

9. Vorrichtung (V) nach Anspruch 8,
**dadurch gekennzeichnet, dass** der Zuleitungs- und der Ausleitungsanschluss (2, 3) jeweils am unteren und oberen Ende eines in der Mittelachse (M) der Magnetisierungskammer (1) angeordneten Rohres (R) ausgebildet ist, wobei jeweils eine oder mehrere in die Magnetisierungskammer (1) führende Queröffnungen (Q) in das Rohr (R) nach dem Zuleitungsanschluss (2) und vor dem Ausleitungsanschluss (3) eingebracht sind.

10. Vorrichtung (V) nach Anspruch 8 und/oder 9,
**dadurch gekennzeichnet, dass** der mindestens eine zylinderförmige Permanentmagnetkörper (4) aus mehreren in seiner Längsachse (L) hintereinander angeordneten Zylindermagneten (6) gebildet ist, wobei jeweils gleiche Pole (N, S) der Zylindermagnete (6) aufeinander zu weisen.

11. Vorrichtung (V) nach Anspruch 8,
**dadurch gekennzeichnet, dass** ein zylinderförmiger Permanentmagnetkörper (4) mit seiner Längsachse (L) in der Mittelachse (M) der Magnetisierungskammer (1) befestigt ist und im Raum um den zylinderförmigen Permanentmagnetkörper (4) eine Brennstoffleitung spiralförmig angeordnet ist, die vom Zuleitungsanschluss (2) zum Ausleitungsanschluss (3) führt.

12. Vorrichtung (V) nach den Ansprüchen 8 bis 10,
**dadurch gekennzeichnet, dass** eine gerade Anzahl von zylinderförmigen Permanentmagnetkörpem (4) in der Magnetisierungskammer (1) mit der Längsachse parallel und symmetrisch zur Mittelachse (M) der Magnetisierungskammer (1) befestigt sind und dass der Querschnitt des um die zylinderförmigen Permanentmagnetkörper (4) verbleibenden Raumes in der Magnetisierungskammer (1) erheblich größer ist als der Querschnitt des Zu- und Ableitungsanschlusses (2, 3) für den Brennstoff (B).

13. Vorrichtung (V) nach Anspruch 12,
**dadurch gekennzeichnet, dass** vier zylinderförmige Permanentmagnetkörper (4) sowie vier weichmagnetische Stäbe (5) wechselweise nebeneinander und mit ihren Längsachsen (LA) parallel und symmetrisch zur Mittelachse (M) in der Magnetisierungskammer (1) befestigt sind.

14. Vorrichtung (V) nach Anspruch 8 und einem oder mehreren der Ansprüche 10 bis 13,
**dadurch gekennzeichnet, dass** in der Magnetisierungskammer (1) nach dem Zuleitungsanschluss für den Brennstoff (B) eine Mischkammer (8) zum Zumischen von Wasserstoff und Sauerstoff zum Brennstoff (B) angeordnet ist.

15. Vorrichtung (V) nach Anspruch 14,
**dadurch gekennzeichnet, dass** der Magnetisierungskammer (1) ein Elektrolysator (10) zur Erzeugung von einem Wasserstoff-Sauerstoffgemisch aus Wasser vorgeschaltet ist.
